(19) Europäisches Patentamt
European Patent Office
Office européen des brevets

(11) **EP 3 491 411 B1**

(12) **FASCICULE DE BREVET EUROPEEN**

(45) Date de publication et mention
de la délivrance du brevet:
**21.07.2021 Bulletin 2021/29**

(51) Int Cl.:
***G01S 7/02*** *(2006.01)*

(21) Numéro de dépôt: **17729432.9**

(86) Numéro de dépôt international:
**PCT/EP2017/063537**

(22) Date de dépôt: **02.06.2017**

(87) Numéro de publication internationale:
**WO 2018/019452 (01.02.2018 Gazette 2018/05)**

(54) **PROCEDE ET DISPOSITIF D'IDENTIFICATION DE MODES D'EMISSION RADAR**

VERFAHREN UND VORRICHTUNG ZUR IDENTIFIZIERUNG VON RADARÜBERTRAGUNGSMODI

METHOD AND DEVICE FOR IDENTIFYING RADAR TRANSMISSION MODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2016 FR 1601151**

(43) Date de publication de la demande:
**05.06.2019 Bulletin 2019/23**

(73) Titulaire: **Thales**
**92400 Courbevoie (FR)**

(72) Inventeurs:
• **GRANDIN, Jean-François**
**78851 Elancourt Cedex (FR)**
• **ENDERLI, Cyrille**
**78851 Elancourt Cedex (FR)**
• **LEMOINE, Jean-Marie**
**78851 Elancourt Cedex (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2016/107905     FR-A1- 2 754 603**
**FR-A1- 2 998 974     FR-A1- 3 011 703**

• **BARRITT B A ET AL: "Enhancing electronic combat system digital signal processing using neural networks", PROCEEDINGS OF THE NATIONAL AEROSPACE AND ELECTRONICS CONFERENCE. (NAECON). DAYTON, MAY 18 - 22, 1992; [PROCEEDINGS OF THE NATIONAL AEROSPACE AND ELECTRONICS CONFERENCE. (NAECON)], NEW YORK, IEEE, US, vol. CONF. 44, 18 mai 1992 (1992-05-18), pages 887-893, XP010064179, DOI: 10.1109/NAECON.1992.220490 ISBN: 978-0-7803-0652-3**

**Description**

La présente invention concerne un procédé d'identification de modes d'émissions radar interceptées par un dispositif de détection de signaux radar (détecteur de radars), notamment en cas d'imperfections des mesures (mesures incomplètes, mesures incertaines). Elle concerne également tout dispositif apte à mettre en œuvre ce procédé.

Elle se situe dans le domaine de la détection des signaux radar, l'invention concerne plus particulièrement l'identification des formes d'onde émises par les radars de l'environnement, notamment dans les contextes de l'alerte (pour l'autoprotection par exemple), de la tenue de situation tactique ou du renseignement.

Dans un système de détection de signaux radar, l'identification des modes radar se situe en aval de la chaîne des traitements appliqués aux émissions qui rayonnent sur l'antenne, ou les antennes, du capteur du système de détection. L'identification souffre notamment des limitations des traitements en amont, en effet on peut citer les inconvénients suivants :

- l'interception de chacun des signaux arrivant au récepteur est souvent incomplète, voire très incomplète ;
- la caractérisation des signaux par des paramètres radioélectriques ainsi que la caractérisation des conditions d'interception n'est pas toujours exhaustive ;
- la construction des pistes (ensembles des impulsions interceptées) peut être corrompue par des valeurs aberrantes.

De plus, l'identification est basée sur la comparaison des caractéristiques d'une piste avec les caractéristiques des radars mémorisées dans une base de données constituée à partir de matériels ayant souffert des défauts mentionnés ci-dessus. Le brevet FR2998974A1 décrit un procédé de détection de signaux radar selon l'art antérieur.

Un but de l'invention est notamment de surmonter les inconvénients précités. A cet effet, l'invention a pour objet un procédé d'identification de modes d'émission radar par un système de détection de signaux radar, un mode étant caractérisé par un ensemble de paramètres caractéristiques définissant lesdits signaux radar, ledit ensemble de paramètres comportant la fréquence d'émission (FR), la longueur d'onde d'impulsion (DI) et la période de répétition (PRI), ledit procédé comportant au moins :

- une première étape sélectionnant un nombre restreint de modes candidats issus d'une base de données à partir de l'interception d'un mode radar inconnu à identifier apte à être caractérisé par un nombre L de paramètres donnés ;
- une deuxième étape effectuant une notation :

  ◦ par affectation d'un indice de similarité à chacun desdits L paramètres, pour chaque mode candidat, ledit indice étant l'indice de similarité entre le moment du paramètre du mode candidat et le moment du même paramètre du mode inconnu et ;
  ◦ par calcul d'une valeur de conflit entre lesdits paramètres pris deux à deux, calcul effectué à partir des indices de similarité de moments de chacun desdits paramètres ;

- une troisième étape consistant à regrouper, par itérations successives, lesdits $L$ paramètres de telle façon que, à chaque itération :

  ◦ les deux paramètres ayant la plus faible valeur de conflit ($K_{min}^{(t)}$) soient regroupés ;
  ◦ les indices de similarité des moments des autres paramètres soient calculés pour le regroupement ;
  ◦ la mise à jour des conflits est effectuée par le calcul de la valeur de conflit entre le regroupement et les autres paramètres ;
  ◦ la plus faible valeur de conflit ($K_{min}^{(t)}$) soit mémorisée ainsi que les indices de similarité ($i_1^{(t)}$ et $i_2^{(t)}$) des deux paramètres coalisés ;

l'identification du mode radar consistant à choisir le regroupement de paramètres issu de l'itération (t) dont la valeur de plus faible conflit ($K_{min}^{(t)}$) est inférieure à un seuil donné, et à retenir en premier le mode candidat dont l'indice de similarité est le plus grand parmi les indices de similarités mémorisés jusqu'à ladite itération (t).

Dans un mode de mise en œuvre particulier, ledit procédé utilise une base de données mémorisant les modes radar sous formes d'intervalles délimités par les valeurs minimale et maximale de chaque paramètre caractéristique, un mode candidat étant sélectionné dans ladite première étape par comparaison des mesures de paramètres dudit mode radar inconnu avec lesdits intervalles, un mode candidat étant retenu s'il comporte au moins un intervalle contenant une mesure d'un paramètre du mode radar inconnu.

Les paramètres utilisés pour définir lesdits intervalles dans la base de données sont par exemple la fréquence d'émission, la longueur d'impulsion et la période de répétition des impulsions.

Les indices de similarité étant du type probabiliste, la valeur du conflit $K$ entre deux paramètres est par exemple donnée par l'équation suivante :

$$K = 1 - \sum_B P_1(B)P_2(B)$$

$P_1(B), P_2(B)$ étant respectivement la probabilité d'un des deux paramètres et la probabilité de l'autre paramètre, dans le mode B parcourant l'ensemble des modes candidats.

Les indices de similarité étant du type possibiliste, la valeur du conflit $K$ entre deux paramètres est par exemple donnée par l'équation suivante :

$$K = 1 - \sup_B \min\big(\pi_1(B), \pi_2(B)\big)$$

$\pi_1(B), \pi_2(B)$ étant respectivement la possibilité d'un des deux paramètres et la possibilité de l'autre paramètre, dans le mode B parcourant l'ensemble des modes candidats.

Les indices de similarité étant du type crédibiliste, la valeur du conflit $K$ entre deux paramètres est par exemple donnée par l'équation suivante :

$$K = 1 - \sum_{B \cap C = \emptyset} m_1(B)m_2(C)$$

$m_1(B), m_2(C)$ étant respectivement la crédibilité d'un des deux paramètres et la crédibilité de l'autre paramètre, dans les modes B et C parcourant l'ensemble des modes candidats.

L'indice de similarité affecté à un paramètre, pour un mode candidat, est par exemple calculé à partir d'un indice de Jaccard, cet indice étant défini entre l'ensemble de valeurs dudit paramètre pour ledit mode radar inconnu et l'ensemble de valeurs dudit paramètre pour ledit mode candidat.

L'invention a également pour objet un dispositif d'indentification de modes d'émission radar comportant un système de réception de signaux radar et des moyens de traitement aptes à mettre en œuvre le procédé tel que précédemment décrit.

L'invention a également pour objet un radar mettant en œuvre ce procédé.

D'autres caractéristiques et avantages de l'invention apparaîtront à l'aide de la description qui suit en regard des dessins annexés qui représentent :

- la figure 1, une illustration d'une interception partielle ;
- la figure 2, des courbes illustrant la possibilité de séparation de classes ;
- la figure 3, un exemple de réalisation d'un système mettant en œuvre l'invention ;
- la figure 4, une illustration d'un exemple de mode de sélection de trois paramètres ;
- la figure 5, une illustration de la distinction de deux modes radar par moments de fréquence et de temps différentiel d'arrivée (PRI) ;
- la figure 6, une illustration du processus d'analyse des notations et du regroupement des paramètres appliqué par le procédé selon l'invention ;
- la figure 7, un dendrogramme de regroupements de paramètres correspondant faisant suite au processus illustré par la figure 6 ;
- la figure 8, un autre exemple de dendrogramme.

Avant de décrire plus en détail l'invention, on précise un problème technique et des insuffisances de l'art antérieur.

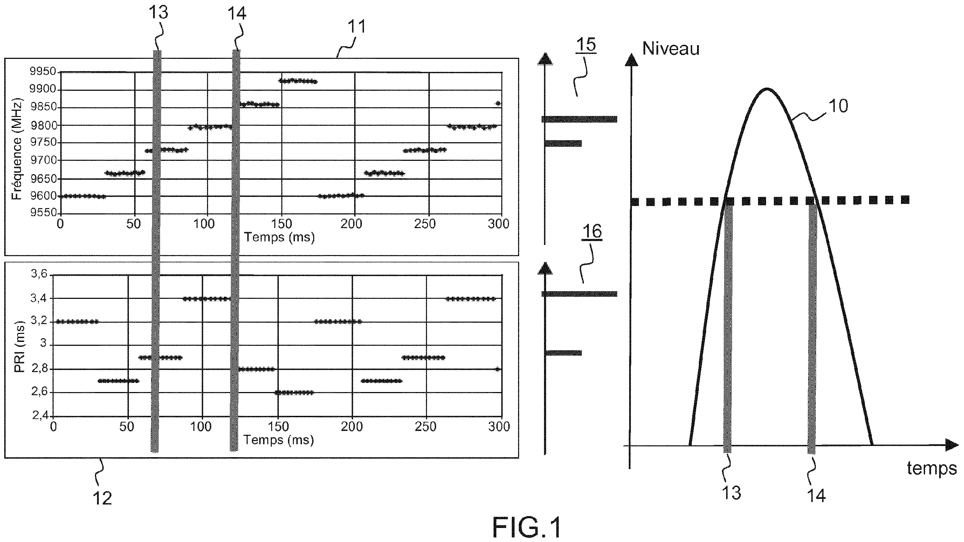

La **figure 1** illustre l'interception partielle d'un mode d'émission radar agile en terme de fréquence porteuse (en ordonnées) et d'intervalles de temps entre impulsions (en abscisses). Sur la gauche de la figure 1 le graphique du haut 11 représente par des points les valeurs de fréquence porteuse de chaque impulsion transmise par le radar et le graphique du bas 12 représente les intervalles de temps entre chaque impulsion et la suivante, ces intervalles étant appelés PRI (*Pulse Repetition Interval* - PRI). Il s'agit d'un mode radar classique dit « à paliers de commutation ». La courbe 10 à droite représente le niveau du signal arrivant sur le récepteur d'écoute, prenant la forme du lobe de l'antenne tournante du radar, en fonction du temps. La sensibilité du récepteur ne permet d'observer que la partie du signal située dans l'intervalle de temps matérialisé par les deux barres verticales 13, 14. Les histogrammes 15, 16 de valeurs observées pour la fréquence et la PRI, reportés verticalement sur la partie centrale de la figure, ne comportent alors que deux raies distinctes alors qu'en réalité le mode radar comprend bien plus de valeurs. Si de plus les paliers de commutation ne sont pas synchrones avec le balayage de l'antenne, les valeurs observées au prochain passage du lobe radar seront différentes. Dans un environnement comprenant de nombreux radars avec des modes relativement semblables, la construction et l'identification des pistes peuvent alors devenir imparfaites.

Ces identifications partielles, réalisées sur la base des paramètres radioélectriques décrivant l'interception pris individuellement, présentent alors des incertitudes de nature essentiellement non stochastique : les interceptions réalisées pour constituer une base de données et les interceptions nouvelles à identifier ne se prêtent pas naturellement à une modélisation par des lois de probabilités comme ce serait le cas si les paramètres mesurés n'étaient corrompus que par du bruit thermique.

Dans ce contexte et du point de vue d'un opérateur, la possibilité de discerner les groupes de paramètres cohérents entre eux et allant dans le sens d'une même identification permettrait un premier niveau de prise en compte des incertitudes non stochastiques. Ces groupes de paramètres seront appelés par la suite coalitions de paramètres.

Ainsi un problème technique qu'on doit résoudre, pour surmonter les inconvénients cités en introduction, est finalement celui de la mise en évidence de telles coalitions dans le contexte de l'identification des modes radar.

Aussi bien dans les missions de renseignement que de situation tactique ou d'autoprotection (alerte), afin de maîtriser le spectre électromagnétique et le cas échéant gêner le fonctionnement des systèmes adverses, une fonction majeure d'un système de guerre électronique est l'identification des émissions interceptées [1]. Ces dernières doivent préalablement être extraites, c'est-à-dire que le mélange des nombreux signaux reçus doit être trié pour former des « pistes » qui caractérisent chaque émission [2,3]. Les signaux radar sont dans leur très grande majorité des trains d'impulsions plus ou moins périodiques, si bien que les émissions sont en général caractérisées par des paramètres de l'impulsion, tels que la fréquence porteuse ou la durée d'impulsion par exemple, ainsi que par des paramètres inter-impulsions, tels que l'intervalle de temps entre impulsions consécutives PRI [1-4].

Les radars modernes ont des formes d'onde complexes où les paramètres radioélectriques peuvent être variables à l'échelle de trains d'impulsions voire à l'échelle des impulsions, l'amplitude relative des variations pouvant aller de moins de 1% à des agilités très importantes. C'est pourquoi on peut être amené à des efforts importants pour par exemple la mise en œuvre de « clustering » pour regrouper les impulsions en pistes et/ou pour d'autres techniques d'intelligence artificielle, avec des contraintes de temps réel [4,5]. Parmi ces techniques, les méthodes à base de réseaux de neurones sont souvent utilisées. Le classifieur « FuzzyARTMAP » développé initialement pour d'autres problèmes d'intelligence artificielle [6] est d'utilisation répandue dans le domaine ESM (détection des radars à des fins tactiques) et comprend de nombreuses variantes [7]. Il a notamment été enrichi d'une étape de « clustering » utilisant les informations de position (principalement la direction d'arrivée et l'amplitude du signal, liée à la distance) des émetteurs en plus des paramètres radioélectriques, et appliqué avec succès sur des flux d'impulsions générées par simulation [8] en comparaison d'autres approches non paramétrique et semi-paramétrique. « FuzzyARTMAP » a également été appliqué sur données réelles [9]. Il présente les avantages de bien se prêter à la parallélisation (pour des problématiques d'implémentation en temps réel), de pouvoir traiter des informations hétérogènes (binaires ou analogiques) ainsi que des données incomplètes, et enfin de pouvoir subir un réapprentissage en ligne. En revanche, il comporte de nombreux paramètres à régler, et sa structure en réseau ne permet pas une compréhension fine de son fonctionnement ni *a fortiori* la formation de coalitions de paramètres.

Afin de lutter contre les incertitudes sur les mesures induites par l'agilité (*stagger*) ou l'instabilité (*jitter*) des paramètres radioélectriques, des approches de reconnaissance basées sur la logique floue sont parfois utilisées en raison de la robustesse qu'elles offrent. Par exemple [10] utilise un moteur d'inférence floue pour reconnaître des impulsions radar. Plus récemment [11,12] proposent une extension à la logique floue de type II où les fonctions d'appartenance aux ensembles flous sont elles-mêmes des quantités floues ce qui permet de prendre en compte les incertitudes des mesures à un plus haut niveau.

De nombreux auteurs utilisent des approches plus classiques, qui offrent souvent de bons résultats mais dont la complexité croît en général rapidement avec le nombre d'impulsions radar pour l'apprentissage des classifieurs et/ou la reconnaissance des pistes inconnues. Les k plus proches voisins et les fonctions de base radiales sont des méthodes citées dans [7,8], ou encore dans [13] pour application spécifique au RWR (*Radar Warning Receiver*). Un exemple d'utilisation des machines à vecteur support pour la reconnaissance d'émissions radar est décrit dans [14]. Parfois on trouve des combinaisons de méthodes comme dans [15] où l'utilisation combinée des ensembles approximatifs de Pawlak et des RVM (*Relevance Vector Machine*) permet de diminuer la charge calculatoire.

Un cas particulier du problème de la reconnaissance des émissions radar est l'identification des spécificités des émetteurs (*Specific Emitter Identification,* SEI) où l'on cherche à reconnaître plus précisément quel appareil individuel (c'est-à-dire quelle copie d'un même type de radar, avec son numéro de série, sa version etc.) est à l'origine des émissions interceptées par le système d'écoute. Les recherches en SEI sont très actives et fournissent d'intéressantes approches pour exploiter les modulations non intentionnelles sur les impulsions radar émises [16,17] ou pour extraire des caractéristiques discriminantes basées sur divers formalismes tels que les fractales [18,19], les cumulants [20,21], la géométrie différentielle stochastique [22], ou encore l'analyse des distributions de paramètres radioélectriques (notamment la PRI) [23]. Sur la base des caractéristiques discriminantes extraites on retrouve en SEI les principales méthodes standard de reconnaissance - méthodes neuronales dans [18,19,21], K-moyennes dans [22], SVM dans [20,24].

Comme reporté dans [11], les difficultés principales proviennent de l'incertitude induite par les fluctuations, intentionnelles ou pas, des paramètres mesurés et les interceptions imparfaites qui en résultent. Dans la pratique, les capteurs qui fournissent des mesures de différents paramètres comportent des imprécisions et des incertitudes (liées aux interceptions partielles et imperfections de construction de pistes, notamment) qui sont propagées dans le processus de fusion qu'est l'identification des modes radar [25]. Afin de prendre en compte la propagation des incertitudes dans un système comportant plusieurs capteurs, il existe différentes techniques de fusion de données adaptées aux différentes natures des incertitudes dont les principales sont les techniques Bayésienne, possibiliste, et crédibiliste (Dempster-Shafer) [25,26]. Récemment, [25] a effectué une comparaison des approches Bayésienne et Dempster-Shafer et a mis en évidence la supériorité de la deuxième dans le contexte de l'identification des modes radar où les incertitudes sont principalement de nature non stochastique. Les apports de l'approche possibiliste [27] vis-à-vis de l'approche probabiliste ainsi que la prise en compte d'une notion de conflit entre sources d'informations au travers de règles « adaptatives » de fusion sont discutés dans [28,29] notamment. Ses propriétés algébriques ont été analysées en profondeur dans [30] et généralisées sur la base d'opérateurs T-conormes dans [31]. Toutefois aucune modalité d'analyse de coalitions de paramètres n'est proposée dans ces différents travaux.

On montre maintenant les limites d'une approche Bayésienne sur un exemple numérique. Supposons disposer de 4 paramètres $P_1,...,P_4$ afin d'identifier une piste parmi 5 modes candidats $C_1,...,C_5$. Des paramètres typiques en écoute électromagnétique sont la fréquence porteuse, la longueur des impulsions, l'intervalle de temps entre celles-ci (PRI), etc. Les masses de probabilité associées aux modes candidats pour chacun des paramètres sont fournies par ailleurs et rassemblées dans le tableau 1 ci-dessous présentant un exemple de probabilités de 5 modes candidats pour 4 paramètres.

**Tableau 1**

|    | P1   | P2   | P3   | P4   |
|----|------|------|------|------|
| C1 | **0.69** | 0.01 | 0.09 | **0.73** |
| C2 | 0.08 | 0.08 | 0.08 | 0.08 |
| C3 | 0.08 | 0.08 | 0.08 | 0.08 |
| C4 | 0.08 | **0.74** | **0.67** | 0.03 |
| C5 | 0.08 | 0.08 | 0.08 | 0.08 |

Aux erreurs d'arrondis près à l'affichage, la somme des valeurs dans chaque colonne vaut 1 puisque chaque paramètre concourt à identifier l'un des 5 modes candidats. A ce niveau il est possible de prendre en compte une classe de rejet où certains des paramètres ne permettraient d'affecter une masse significative de probabilité à aucun des modes candidats. Les masses de probabilités étant généralement obtenues à l'issue d'une étape de renormalisation pour sommer à 1, une manière de prendre en compte une classe de rejet est de seuiller à 0 les masses trop faibles avant renormalisation.

Du Tableau 1 on peut déduire des probabilités pour chaque candidat, conditionnelles aux 4 valeurs conjointes des paramètres selon la formule classique de combinaison bayésienne :

$$\pi(C_n/P_1 \dots P_4) = \frac{\prod_{j=1}^{4} \pi(C_n/P_j)}{\sum_{i=1}^{5} \prod_{j=1}^{4} \pi(C_i/P_j)} \,,$$

où $\pi(C_i/P_j)$ désigne la probabilité du mode $C_i$ pour la valeur du paramètre $P_j$, i = 1 à 5 et j = 1 à 4 (i.e. la case du Tableau 1 à la i-ème ligne et j-ème colonne). L'application de la formule de combinaison ci-dessus donne le tableau 2 des probabilités des modes candidats ci-dessous, présentant une combinaison bayésienne des 4 paramètres :

**Tableau 2**

| $C_1$ | 0.26 |
|-------|------|

(suite)

| | |
|---|---|
| $C_2$ | 0.02 |
| $C_3$ | 0.02 |
| $C_4$ | 0.67 |
| $C_5$ | 0.02 |

Le résultat obtenu dans le tableau 2 est peu probant car dans le tableau 1 ressort clairement 2 groupes de paramètres :

- La coalition $\{P_1, P_4\}$, qui est en faveur du candidat $C_1$ ;

- et la coalition $\{P_2, P_3\}$ en faveur du candidat $C_4$.

Si maintenant on calcule les probabilités des modes candidats pour ces coalitions on obtient le tableau 3, toujours avec la règle de combinaison Bayésienne (combinaison de 2 coalitions de 2 paramètres) :

**Tableau 3**

| | $\{P_1, P_4\}$ | $\{P_2, P_3\}$ |
|---|---|---|
| $C_1$ | **0.96** | 0.01 |
| $C_2$ | 0.01 | 0.01 |
| $C_3$ | 0.01 | 0.01 |
| $C_4$ | 0.01 | **0.96** |
| $C_5$ | 0.01 | 0.01 |

Etant données les valeurs reportées dans le tableau 3, effectuer une combinaison bayésienne supplémentaire des probabilités obtenues n'a guère de sens sauf à accorder une confiance peu raisonnable aux probabilités très faibles. Les coalitions $\{P_1, P_4\}$ et $\{P_2, P_3\}$ ayant même probabilité, il n'est pas possible de dégager une coalition.

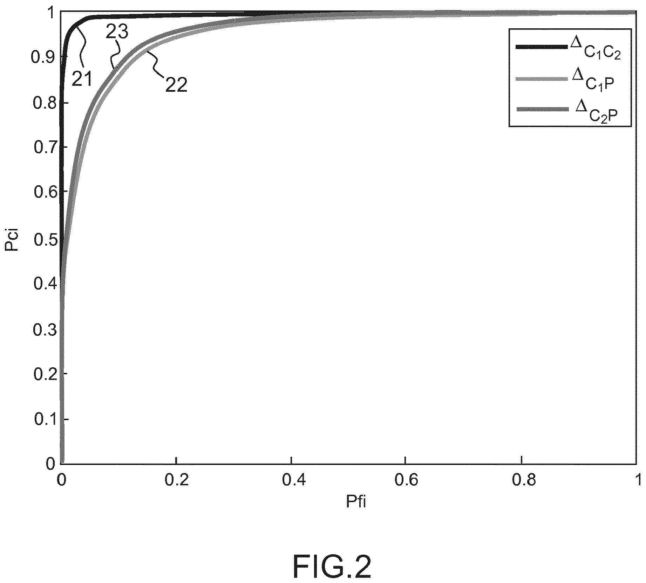

Les insuffisances de l'art antérieur peuvent aussi être mises en évidence dans le cas suivant. Considérons deux candidats $C_1$ et $C_2$ décrits par des paramètres distribués normalement avec des moyennes $\mu_1$ et $\mu_2$ et des covariances $\Sigma_1$ et $\Sigma_2$ respectivement. On prend par exemple 4 paramètres et $\mu_1 = [1,8,3,5]^T$, $\mu_2 = [6,1,9,2]^T$, $\Sigma_1 = 2.I_4$ et $\Sigma_2 = 3.I_4$, où $I_4$ est la matrice identité de taille 4x4 - les valeurs pouvant avoir été apprises avec une base de données d'apprentissage. On suppose recevoir une piste qui est une réalisation d'une classe P qui, en raison des imperfections des traitements en amont, est un mélange des paramètres de $C_1$ et $C_2$. Dans cet exemple le mélange est supposé être une loi normale de moyenne $[\mu_1(1), \mu_2(2), \mu_1(3), \mu_2(4)]$ et de covariance diag(2,3,2,3) - diag(.) désignant la matrice diagonale de coefficients diagonaux donnés par ses arguments. Autrement dit les réalisations de P ont leurs premier et troisième paramètres issus de $C_1$ et leur deuxième et quatrième paramètres issus de $C_2$. Afin d'analyser la séparabilité des classes, on peut montrer que le test optimal permettant de décider si deux réalisations correspondent à la même classe est la comparaison d'une distance de Mahalanobis à un seuil. Ses performances peuvent être calculées explicitement et sont illustrées par la figure 2.

La **figure 2** présente des courbes dans un système d'axes, où l'axe des ordonnées Pci et l'axe des abscisses Pfi correspondent respectivement à la probabilité de bonne et de fausse identification.

Les trois courbes 21, 22, 23 correspondent respectivement aux tests $\Delta_{C1C2}$, $\Delta_{C1P}$ et $\Delta_{C2P}$ permettant de distinguer les classes $C_1$ et $C_2$, les classes $C_1$ et P, et les classes $C_2$ et P, respectivement. Une probabilité Pci de 1 signifie que deux réalisations issues des deux classes considérées ne sont pas confondues avec probabilité de 1. Une probabilité Pfi de 1 signifie que deux réalisations issues de la même classe ne sont pas associées à la même classe avec probabilité de 1. La figure 2 illustre la dégradation des capacités d'identification puisque, pour séparer la classe mélangée P de $C_1$ ou de $C_2$ (cf. les courbes 22 et 23), il faut admettre une grande Pfi (supérieure à 0.5) pour pouvoir bien séparer P de $C_1$ ou de $C_2$ alors que dans le cas idéal (courbe 21) une Pfi inférieure à 0.05 est suffisante.

Pour surmonter ces insuffisances de l'art antérieur, le procédé selon l'invention réalise notamment la formation de coalitions de paramètres basée sur l'analyse des conflits entre ceux-ci. La notion de conflit a été introduite dans le domaine de la fusion de données et est définie d'une manière très générale dans le cadre de plusieurs formalismes utiles en identification de modes radar (probabilités, possibilités, crédibilités). Outre la souplesse du choix du cadre d'application, l'invention permet de mettre en évidence rapidement les coalitions de paramètres, et ainsi de fournir une meilleure compréhension des incertitudes en jeu dans le mécanisme d'identification.

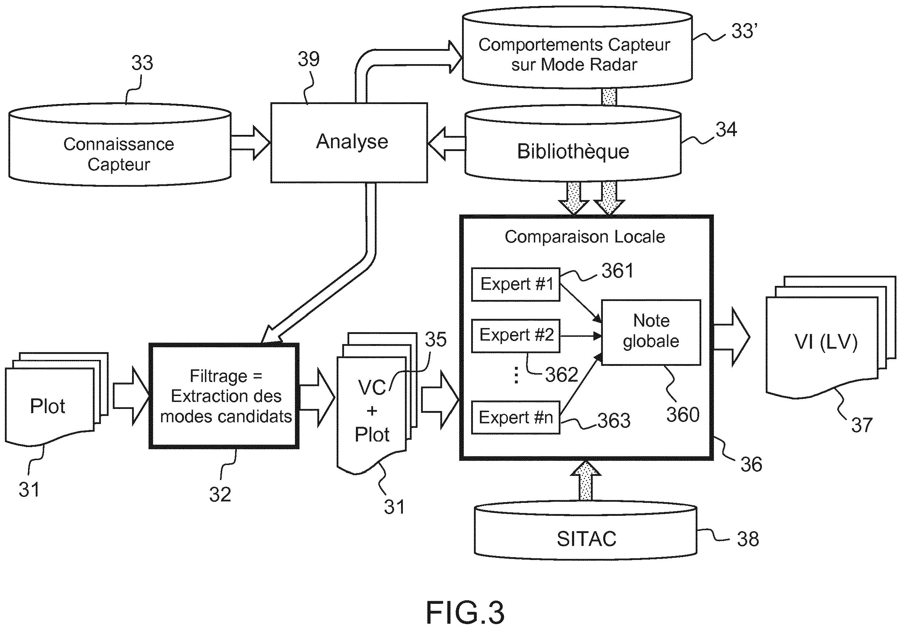

La **figure 3** illustre un exemple de système mettant en œuvre les étapes possibles du procédé selon l'invention.

Avant de présenter plus en détail l'invention, on rappelle qu'un système d'identification de modes radar se décompose classiquement en trois parties :

- La première partie consiste, à partir d'une interception d'un mode radar, à sélectionner un nombre restreint de modes candidats issus d'une base de données de référence ;

- La deuxième partie consiste à affecter à chaque mode candidat une masse de probabilité en se basant sur les moments des paramètres mesurés (modalités d'histogrammes) et sur des indices de similarité bien adaptés aux données catégorielles ou mixtes ;

- La troisième partie fait l'analyse des notes sur la base des masses de probabilité et des indices de similarité.

La présente invention porte notamment sur cette troisième étape. L'invention se distingue des méthodes de l'état de l'art notamment par un principe : la plupart des algorithmes utilisent une somme pondérée d'indices partiels, sans mettre en avant le conflit entre les preuves partielles apportées par chaque caractéristique de la piste dont on cherche à identifier le mode. Or c'est de cette seule mesure de conflit que peut résulter l'estimation d'une confiance dans la décision, comme illustré dans l'exemple précédent. Ainsi, la solution selon l'invention permet de tenir compte des conflits entre les preuves partielles apportées par chaque caractéristique d'une piste à identifier. Les preuves partielles peuvent inclure une possible classe de rejet où aucune classe de la base de données ne correspond à la mesure.

Il est à noter que la solution proposée ouvre aussi la possibilité d'une étape supplémentaire de traitement consistant à améliorer (en corrigeant et/ou complétant) la base de données. L'analyse de conflits introduite dans le procédé selon l'invention montre un grand intérêt dans cette étape supplémentaire.

Comme mentionné précédemment la solution proposée s'inscrit donc dans le cadre des principales étapes classiquement suivies dans un processus d'identification. Ces étapes, correspondant aux parties rappelées succinctement ci-dessus, peuvent être décrites ainsi :

- La première étape consiste en un premier filtrage des candidats de la base de référence par rapport à des caractéristiques plus ou moins grossières de la piste à identifier.

- La deuxième étape consiste à utiliser des caractéristiques plus fines de la piste à identifier afin de déterminer une information traduisant la qualité de l'adéquation entre la piste et chaque candidat possible de la base de référence. Selon les variantes de mise en oeuvre, cette information peut être notamment une vraisemblance, une concordance, un taux de recouvrement, ou une probabilité d'identification mais dans tous les cas il s'agit de quantifier la proximité entre la piste détectée et un mode candidat.

- La dernière étape consiste alors à sélectionner le ou les candidats de la base de référence le(s) plus proche(s) de la piste à identifier.

Le schéma de la figure 3 fait apparaître les grandes étapes de l'identification, ainsi que les endroits où les spécificités du capteur sont prises en compte.

Dans la première étape, à partir d'une piste 31 (ensemble des impulsions radar interceptées), on réalise l'extraction 32 des modes candidats. Cette extraction est réalisée sur la base de la connaissance des spécificités du capteur 33, 33' recevant le signal radar, et d'une bibliothèque 34 de modes radar, cette dernière formant une base de données de référence. L'analyse 39 de la bibliothèque, préalable à l'identification, délivre des arbres d'intervalles pour la sélection rapide des modes candidats en phase d'extraction 32.

En sortie d'extraction 32, on obtient les modes candidats formatés par exemple sous forme de vecteurs 35. Ces derniers et la piste détectée 31 sont ensuite traités dans la deuxième étape 36. Dans cette étape, pour chaque mode candidat, on établit des métriques 361, 362, 363 sur chaque caractéristique de la piste 31. Puis une synthèse globale de ces métriques est réalisée pour aboutir à une notation globale 360. On obtient en sortie de cette étape des vecteurs de vraisemblance 37, le mode candidat retenu étant celui de plus grande vraisemblance.

Le cas échéant, le procédé peut également utiliser dans la deuxième étape 36 la connaissance de probabilités *a priori* grâce à la connaissance d'une situation tactique 38.

Le procédé selon l'invention peut être mis en œuvre par plusieurs types de systèmes. Il faut au moins des moyens de réception de signaux radar et des moyens de traitement, lesquels comportent notamment la base de données 34. Le système peut être du type ESM (détecteur de radars), mais ce peut être aussi un radar.

On décrit ci-après plus en détail les étapes possibles du procédé selon l'invention :

- La sélection 32 des modes candidats par arbre d'intervalles ;
- La notation 36 des modes candidats ;
- L'analyse des notes, en introduisant des mesures de conflit et les coalitions de paramètres.

Sélection des candidats

Cette étape 32 a pour objectif de réduire le coût calculatoire de mise en œuvre en générant une liste restreinte des signatures possibles pour la piste mesurée grâce à un mécanisme peu coûteux. Elle repose sur un mécanisme d'indexation rapide des données. L'index utilisé doit être construit afin de garantir la sélection de la bonne signature parmi les signatures candidates à la notation fine, même en présence de fausses mesures (indexation dite « tolérante »).

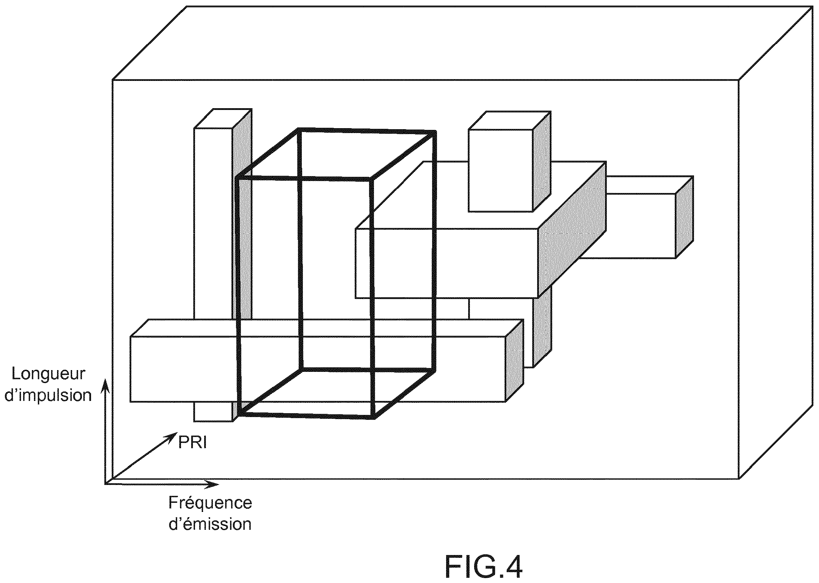

On effectue ici une première sélection de candidats possibles, en se basant sur des paramètres typiques de fréquence, de longueur d'impulsion et de PRI. On compare les intervalles de variation possible entre le paramètre mesuré et le paramètre décrit dans la base de données (bibliothèque 34) pour chacun des modes, comme illustré par la **figure 4.** Une manière très efficace de réaliser cette comparaison est de procéder par arbres binaires d'intervalles [**32**], paramètre par paramètre.

La **figure 4** représente des modes radars dans l'espace à 3 dimensions correspondant chacune à un paramètre, par exemple la fréquence d'émission, la PRI et la longueur d'impulsions. Sur chacune des dimensions, un segment est un intervalle de valeurs pour le paramètre associé. Chaque mode est ainsi représenté par un parallélépipède, dont les extrémités sont les valeurs minimales et maximales de chacun des trois paramètres, décrites dans la base de données 34. Les valeurs minimales et maximales peuvent être obtenues par tous modes de renseignements.

La **figure 4** présente plusieurs parallélépipèdes correspondant chacun à un mode candidat.

Une analyse préalable permet de structurer la base de données en arbres binaires de recherche.

Une piste interceptée est indexée en faisant passer les intervalles de valeurs mesurées pour chacun de ses paramètres (fréquence d'émission, PRI, longueurs d'impulsions par exemple) dans les arbres d'intervalles correspondant, et en retenant tous les intervalles qui les interceptent, c'est-à-dire ayant une intersection non vide avec les intervalles associés à la piste mesurée, de sorte qu'un mode observé éventuellement de manière incomplète ou avec des valeurs aberrantes soit retenu avec une base de données de modes eux-mêmes éventuellement renseignés de manière partielle. Sur l'exemple de la **figure 4** on obtient par ce procédé une liste de candidats vis-à-vis de la fréquence, une autre liste vis-à-vis de la longueur d'impulsion, et encore une liste vis-à-vis de la PRI. Les candidats sélectionnés étant finalement ceux qui ont un parallélépipède ayant une intersection non vide avec d'autres parallélépipèdes.

La réunion des trois listes fournit la liste des candidats sujets à notation dans l'étape suivante. La figure 4 présente un exemple d'indexation avec trois paramètres mais on peut étendre ce mode de sélection à N paramètres, la représentation étant alors étendue à N dimensions.

Notation des candidats

Selon l'invention, on note les modes candidats en se basant sur deux principes décrits ci-après, ces deux principes étant l'utilisation des moments des paramètres et l'utilisation des indices de similarité entre variables catégorielles. Dans cette étape, l'invention effectue de façon originale et judicieuse l'utilisation conjointe de ces deux principes, connus séparément par ailleurs, pour affecter une note aux modes candidats.

Dans cette étape on ne se restreint plus, par exemple, aux seuls intervalles de valeurs prises par les paramètres des modes candidats retenus dans l'étape précédente. En reprenant l'exemple de la **figure 4,** le nouvel algorithme note les candidats à partir des moments de PRI, de fréquences ainsi que de longueurs d'impulsion. Les descriptions par moments sont plus fines que les descriptions par intervalles de valeurs minimales/maximales, et permettent notamment de distinguer des modes qu'on ne serait pas capables de distinguer par intervalles comme l'illustre la figure suivante.

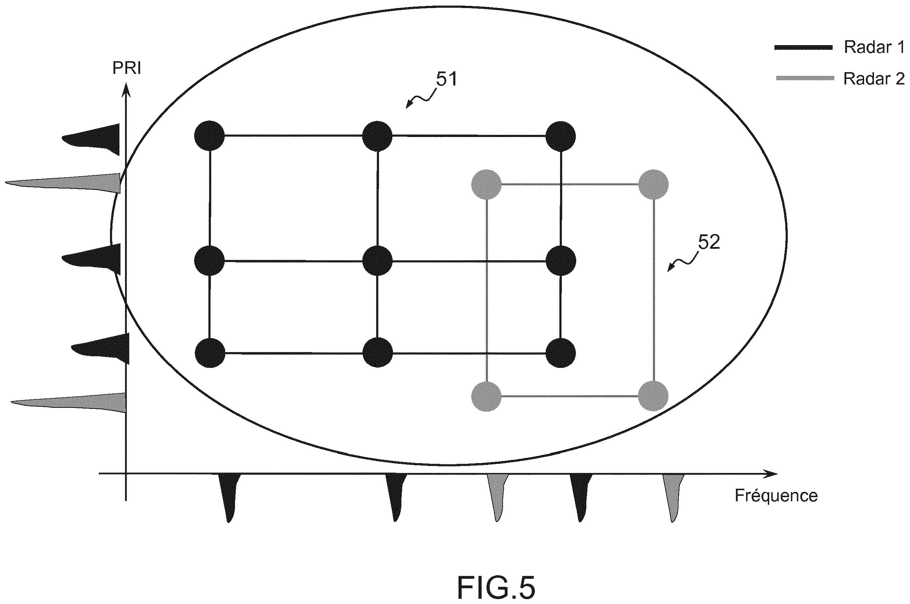

Sur la **figure 5,** deux modes radar 51, 52 sont représentés, en noir et en gris, dans le plan fréquences émises / PRI. Plus précisément les points noirs représentent les couples (fréquence, PRI) d'un premier mode et les points gris représentent les couples (fréquence, PRI) d'un deuxième mode.

Ces modes 51, 52 se chevauchent. En effet, ils ne sont pas séparés par les intervalles des paramètres car il existe au moins une valeur de fréquence de l'un des modes qui est encadrée par deux valeurs de fréquences de l'autre mode, et de même pour la PRI (autrement dit, pour chaque paramètre, l'intervalle de valeurs dans l'un des modes intercepte l'intervalle de valeurs dans l'autre mode). En pratique, dans certaines bandes de fréquence il n'y a pratiquement que des radars multifréquences et multi-PRI agiles sur de grands intervalles. La connaissance des intervalles n'intervient alors que dans la sélection de candidats par indexation. L'identification, pour être pertinente, doit nécessairement utiliser des descriptions plus fines que des intervalles de valeurs.

D'autre part, l'expérience montre que l'utilisation des moments offre une plus grande robustesse que l'utilisation des histogrammes des valeurs prises par les paramètres. Par exemple, une interception partielle d'un mode donné conduit à un histogramme mesuré dont le support est inclus dans celui de l'histogramme décrit dans la bibliothèque, mais dont la répartition des poids peut être très différente. Les mesures de distance entre densités telles que les φ-divergences [33] sont alors susceptibles de fournir des résultats peu robustes.

L'autre principe à la base de la notation des candidats est d'utiliser des indices de similarités entre les moments d'un paramètre de la piste inconnue et les moments du même paramètre dans un mode candidat. Ici, les paramètres sont considérés comme catégoriels. En effet, il n'y a pas de relation d'ordre entre deux modes radar, même si les valeurs numériques de certains de leurs paramètres sont ordonnées. Ainsi le mode de balayage angulaire (tournant, sectoriel, aléatoire etc.), par exemple, n'est pas un paramètre quantitatif mais catégoriel puisqu'il n'y a pas de relation d'ordre entre ses paramètres (tournant, sectoriel, aléatoire ...).

De même les paramètres quantitatifs (fréquence, PRI etc.), bien qu'ordonnés naturellement par leurs valeurs numériques, ne traduisent pas un ordre entre les modes radar. L'absence de relation d'ordre entre les modes radar est la raison pour laquelle on considère leurs paramètres comme catégoriels et que l'on se base sur les indices de similarités qui permettent de mesurer une ressemblance entre eux. Il existe une très grande variété d'indices de similarité [33] et le choix d'un indice n'est pas critique pour la solution mise en œuvre par l'invention. De façon plus générale, il est même possible d'utiliser un indice différent par paramètre. Dans une variante d'implémentation on propose l'utilisation de l'indice de Jaccard [33] avec un formalisme de type probabiliste comme cela sera décrit par la suite.

L'indice de similarité entre les moments d'un paramètre de la piste inconnue et les moments de ce même paramètre dans un mode candidat permet alors de quantifier une notion de conflit entre les identifications partielles fournies par plusieurs paramètres.

On rappelle que dans le domaine de la fusion de données, on distingue classiquement [31] :

- Les opérateurs conjonctifs (T-normes), qui sont utilisés quand les informations provenant des différentes sources d'information sont concordantes, c'est-à-dire sans conflit. On accorde alors la masse de croyance à l'intersection des hypothèses de manière à éliminer les informations qui sont à la fois affirmées par une source et totalement rejetées par l'autre.

- Les opérateurs disjonctifs (T-conormes), qui sont utilisés quand une discordance importante est mise en évidence. Si malgré cette discordance on décide d'associer les données, on accorde la masse de croyance à la réunion des hypothèses en présence.

Selon le formalisme adopté, probabiliste, possibiliste, ou crédibiliste, les opérateurs conjonctifs et disjonctifs s'expriment de manière différente. Dans une variante d'implémentation avec un cadre probabiliste, un exemple d'opérateurs conjonctif et disjonctif est le suivant, pour deux masses de probabilités $m_1$ et $m_2$ d'un mode candidat A :

$$(m_1 \otimes m_2)(A) = \frac{m_1(A).m_2(A)}{\sum_B m_1(B)m_2(B)} \; ;$$

$$(m_1 \oplus m_2)(A) = \frac{m_1(A) + m_2(A)}{2} \quad .$$

Ici, $m_1$ et $m_2$ sont les masses de probabilité du mode candidat A pour deux paramètres différents donnés, et $m_1 \oplus m_2$ (respectivement $m_1 \oplus m_2$) est la masse de probabilité du mode A quand on fusionne ces paramètres en une coalition de type disjonctif (respectivement conjonctif).

Dans une autre variante d'implémentation dans un cadre possibiliste, un exemple d'opérateurs conjonctif et disjonctif est le minimum et le maximum possibiliste respectivement, pour cette fois deux mesures de possibilités $m_1$ et $m_2$ d'un mode candidat A :

$$(m_1 \otimes m_2)(A) = \frac{\min(m_1(A), m_2(A))}{\sup_B \min(m_1(B), m_2(B))},$$

$$(m_1 \oplus m_2)(A) = \frac{\max\big(m_1(A), m_2(A)\big)}{\sup_B \max\big(m_1(B), m_2(B)\big)},$$

où B est une variable muette qui parcourt l'ensemble des modes candidats.

Encore une autre variante d'implémentation dans un cadre crédibiliste utiliserait la combinaison Dempster-Shafer comme opérateur conjonctif, pour deux masses de croyance $m_1$ et $m_2$ associées à un mode candidat A :

$$\begin{cases} (m_1 \otimes m_2)(A) = \dfrac{\sum_{B \cap C = A} m_1(B) m_2(C)}{\sum_{B \cap C \neq \emptyset} m_1(B) m_2(C)} & \forall A \neq \emptyset \\ (m_1 \otimes m_2)(\emptyset) = 0 \end{cases} ;$$

$$\begin{cases} (m_1 \oplus m_2)(A) = \dfrac{\sum_{B \cup C = A} m_1(B) m_2(C)}{\sum_{B \cup C \neq \emptyset} m_1(B) m_2(C)} & \forall A \neq \emptyset \\ (m_1 \oplus m_2)(\emptyset) = 0 \end{cases} ,$$

où B et C parcourent l'ensemble des modes candidats.

Il existe bien d'autres T-normes et T-conormes qui peuvent convenir (normes de Lukasiewicz, drastique, du minimum nilpotent, de Hamacher etc. avec leurs conormes duales [**31**]). Dans tous les cas, le degré de conflit entre les sources évoqué dans le paragraphe précédent, peut être mesuré *via* le facteur de re-normalisation de la partie conjonctive, comme introduit dans [**29-31**]. On a ainsi :

le conflit probabiliste :

$$K = 1 - \sum_B P_1(B) P_2(B) \qquad (1)$$

le conflit possibiliste :

$$K = 1 - \sup_B \min\big(\pi_1(B), \pi_2(B)\big) \qquad (2)$$

et le conflit crédibiliste :

$$K = 1 - \sum_{B \cap C = \emptyset} m_1(B) m_2(C) \qquad (3)$$

où B et C parcourent l'ensemble des modes candidats.

Plus généralement le conflit est donné par le complément à 1 de la normalisation de l'opérateur conjonctif. D'autres variantes de calcul du conflit sont possibles, par exemple en tenant compte de l'autoconflit. Quoi qu'il en soit le conflit *K* est d'autant plus grand que les sources sont jugées discordantes. Il permet ainsi de pondérer le regroupement entre l'approche conjonctive et disjonctive, ce qui est l'approche proposée par l'invention.

La table des conflits entre paramètres, obtenue selon le formalisme choisi (probabiliste, possibiliste, crédibiliste), est à la base de l'analyse des notes dans l'étape suivante. Pour fixer les idées, en ajoutant aux paramètres de fréquence FR, durée d'impulsion (DI) (ou longueur d'impulsion) et PRI déjà considérés plus haut les paramètres supplémentaires ΔF (différences de fréquences émises), DPRI (différences de PRI), type de modulation intrapulse (IP), temps de groupe (TG) et type de balayage, la table des conflits peut se présenter comme la matrice triangulaire. Le tableau 4 suivant en est un exemple :

**Tableau 4**

| Conflits | FR | ∆F | PRI | DPRI | DI | IP | TG |
|---|---|---|---|---|---|---|---|
| ∆F | $K_{12}$ | | | | | | |
| PRI | $K_{13}$ | $K_{23}$ | | | | | |
| DPRI | $K_{14}$ | $K_{24}$ | $K_{34}$ | | | | |
| DI | $K_{15}$ | $K_{25}$ | $K_{35}$ | $K_{45}$ | | | |
| IP | $K_{16}$ | $K_{26}$ | $K_{36}$ | $K_{46}$ | $K_{56}$ | | |
| TG | $K_{17}$ | $K_{27}$ | $K_{37}$ | $K_{47}$ | $K_{57}$ | $K_{67}$ | |
| Balayage | $K_{18}$ | $K_{28}$ | $K_{38}$ | $K_{48}$ | $K_{58}$ | $K_{68}$ | $K_{78}$ |

A ce stade le conflit est calculé ici entre les paramètres pris deux à deux. Les quantités Kij représentent les valeurs de conflit et varient de 0 à 1.

On peut prévoir des variantes de calculs de conflits entre plus de deux paramètres.

Analyse des notes

La troisième étape consiste à analyser les résultats obtenus dans la deuxième étape de notation afin de sélectionner le ou les candidats de la base de référence les plus proches de la piste à identifier.

A cet effet, la solution selon l'invention exploite les conflits entre paramètres pour déterminer les coalitions en faveur ou non de la décision, la décision pouvant être l'affectation d'un mode candidat à la piste, ou un classement des modes candidats par rapport à la piste à identifier. En plus d'extraire automatiquement les sous-ensembles de paramètres concordant, l'analyse des conflits permet également de déterminer un conflit global qui renseigne sur la confiance que l'on peut accorder dans la décision.

Le procédé selon l'invention consiste alors à regrouper par itérations successives les paramètres les moins conflictuels entre eux afin d'obtenir une classification hiérarchique de ceux-ci. Le regroupement de paramètres entraîne la mise à jour de tables d'indices de similarité entre la piste et les modes candidats pour les différents paramètres, les nouveaux indices calculés prenant en compte les conflits. L'invention effectue le regroupement des paramètres les moins conflictuels et met à jour les tables de similarité selon une conjonction et une disjonction pondérées par le conflit entre les sources fusionnées.

On élabore dans cette optique les opérateurs « adaptatifs » [31] (dans le sens où ils dépendent du conflit) avec la notation $\odot$, dont l'expression suivante donne la table d'indice de similarité $m_{\{1,2\}}$ du regroupement {1,2} en fonction des tables $m_1$ et $m_2$ des groupes 1 et 2, ainsi que du conflit $K$ :

$$m_{\{1,2\}}(A) \equiv m_1 \odot m_2(A) = (1 - K)m_1 \otimes m_2(A) + K m_1 \oplus m_2(A) \quad (4)$$

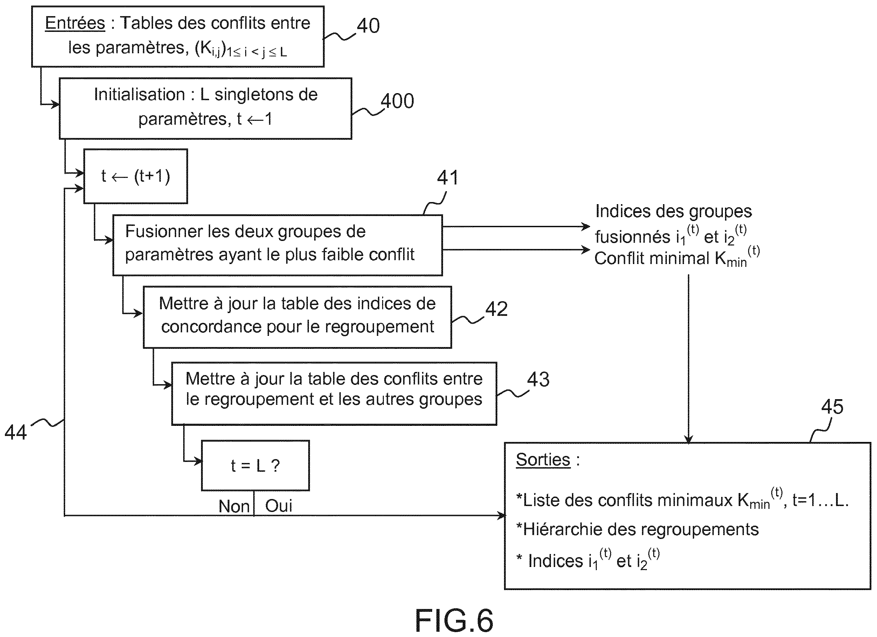

Dans l'équation (4) les termes $m_1$, $m_2$ sont soit une masse de probabilité, soit une possibilité, soit une masse de croyance, et $K$ désigne le conflit dans le formalisme correspondant. La table $m_{\{1,2\}}$ donne ainsi les indices de similarité entre la piste et les différents modes candidats, pour le regroupement de paramètres {1,2}. L'algorithme de fusion des identifications partielles fournies par les différents paramètres est schématisé sur la **figure 6,** où $L$ est le nombre de paramètres et $t$ l'indice d'itération variant de 0 à $L$.

La **figure 6** illustre le processus itératif d'analyse des notes conduisant au regroupement des paramètres en coalition. Ce processus est illustré en regard de la table des conflits illustrée par le tableau 4, $L$ étant égal à 8. Il regroupe par itérations successives les paramètres les moins conflictuels entre eux, le nombre d'itérations étant égal à 8 dans cet exemple.

Les paramètres d'entrée 40 sont les paramètres des tables de conflits, pour une table donnée. Dans la phase d'initialisation 400, on retient les $L$ paramètres en jeu, par exemple les 8 paramètres RF, ∆F, PRI, DPRI DI, IP, TG et Balayage du tableau 4. On commence ensuite le processus itératif.

Chaque itération comporte :

- une phase 41 de fusion des deux groupes de paramètres ayant le plus faible conflit ;

- une phase 42 de mise à jour de la table des indices de similarité pour le regroupement, selon l'équation (4) ;

- une phase de mise à jour de la table des conflits entre le regroupement obtenu et les autres groupes.

Une autre itération 44 est effectuée jusqu'à ce que le nombre d'itérations atteigne *L*.

A chaque itération t, on mémorise la valeur du conflit minimal $K_{min}^{(t)}$ ayant conduit au regroupement et les indices $i_1^{(t)}$ et $i_2^{(t)}$ des deux groupes fusionnés. Dans ce processus itératif, ce que l'on appelle un groupe de paramètres identifie un même paramètre de tous les modes candidats, par exemple le groupe des PRI. Les indices $i_1^{(t)}$ et $i_2^{(t)}$ sont donc les indices de similarité des paramètres fusionnés pour chaque mode candidat, s'il y a N modes candidats, il y a N indices $i_1^{(t)}$ et $i_2^{(t)}$.

En sortie 45 du processus itératif, après les *L* itérations, on obtient une liste des conflits minimaux $K_{min}^{(t)}$ et une hiérarchie des regroupements via les listes d'indices de similarité $i_1^{(t)}$ et $i_2^{(t)}$, t variant de 1 à *L*. Plus précisément, une liste d'indices de similarité est associée à chaque itération d'ordre t pour tous les modes candidats, ces indices étant ceux qui ont été mémorisés au cours des itérations 1 à t.

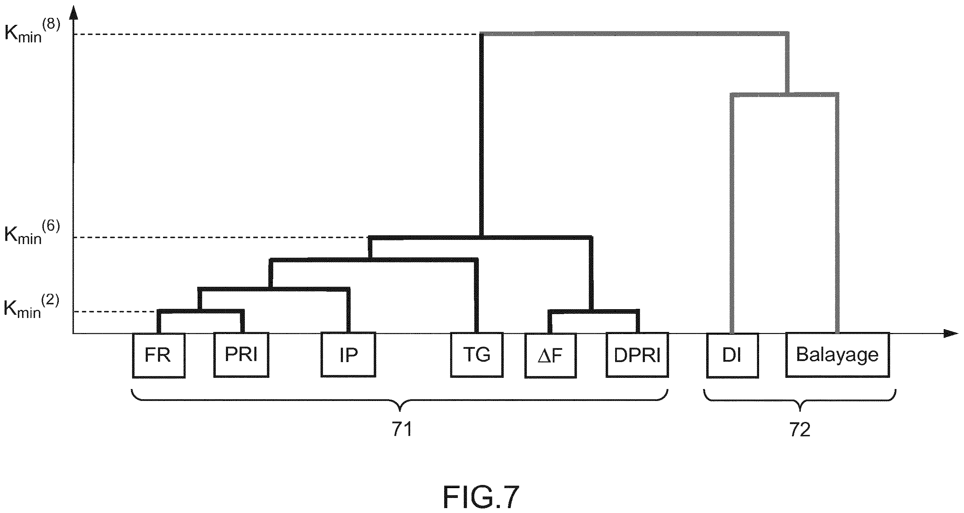

Si la suite des conflits minimaux $K_{min}^{(t)}$, t=1...*L*, est croissante, les résultats de l'analyse décrite en regard de la **figure 6** peuvent être présentés à l'opérateur sous la forme d'un « dendrogramme » [**33**], c'est-à-dire un diagramme utilisé pour illustrer visuellement la hiérarchie des regroupements des différents paramètres en fonction des valeurs de conflit minimal à chaque itération. La **figure 7** représente un dendrogramme des 8 paramètres considérés pour l'exemple du tableau 4.

Les valeurs de la suite des conflits $K_{min}^{(t)}$ se répartissent en plusieurs groupes distincts de valeurs proches. On peut ainsi distinguer des coalitions de paramètres. Sur la **figure 7,** par exemple, $K_{min}^{(6)}$ permet de distinguer deux coalitions 71, 72 de paramètres qui sont {FR, PRI, IP, TG, DF, DPRI} et {DI, Balayage}.

L'identification consiste alors à choisir le regroupement dont le conflit est inférieur à un seuil de conflit maximal donné, pouvant par exemple être choisi par l'opérateur dans la liste des conflits minimaux. A ce regroupement est associée une liste d'indices de similarité avec les modes candidats. Dans cette liste, la composante de plus fort niveau donne l'indice du mode candidat retenu en premier. Les autres modes candidats peuvent être classés ainsi de suite, la valeur du conflit associé à chaque coalition jouant le rôle d'un indice de confiance dans la décision. Enfin, la localisation géographique de l'émetteur à identifier permet, quand elle est disponible, de conforter l'identification : un mode de radar monté sur navire ne peut raisonnablement provenir que d'un émetteur localisé sur la mer, par exemple.

Au cours d'une itération de l'analyse décrite par la **figure 6,** il peut arriver parfois en fonction des situations que le conflit minimal entre un regroupement et les autres groupes de paramètres soit un peu plus faible que le plus petit des conflits avant regroupement (la suite $K_{min}^{(t)}$, t=1...L, n'est alors pas croissante). C'est le cas lorsque le regroupement de trois paramètres donnés (ou trois groupes donnés de paramètres) est moins discordant que n'importe lequel des regroupements de ces paramètres (ou groupes de paramètres) pris deux à deux, ce qui est relativement rare, mais possible. Dans ces cas-là, il est clair que l'analyse doit être adaptée de façon à regrouper les trois paramètres ou groupes de paramètres, en adaptant les calculs du conflit et de la table de regroupement (équation 4) à trois éléments dans l'itération concernée ; Pour un mode candidat A :

$$m_{\{1,2,3\}} = m_1 \odot m_2 \odot m_3(A) = (1-K)m_1 \otimes m_2 \otimes m_3(A) + K m_1 \oplus m_2 \oplus m_3(A) \quad (5)$$

le conflit *K* étant modifié en conséquence, c'est-à-dire :

- $K = 1 - \sum_B m_1(B)m_2(B)m_3(B)$ dans un cadre probabiliste ,
- $K = 1 - \sup_B \min(m_1(B), m_2(B), m_3(B))$ dans un cadre possibiliste ,
- ou $K = 1 - \sum_{B \cap C \cap D = \varnothing} m_1(B)m_2(C)m_3(D)$ dans un cadre crédibiliste,

B, C, D parcourant l'ensemble des modes candidats. Une telle adaptation (équation 5) a un sens en vertu de la propriété d'associativité des T-normes et T-conormes [**31**]. L'analyse fournit alors finalement une structure hiérarchique, mais qui n'est pas binaire (c'est-à-dire avec des nœuds de plus de deux branches). On obtient ainsi une « hiérarchie » [**33**], qui est une structure moins raffinée que le dendrogramme mais tout de même utile pour extraire des coalitions de paramètre.

Après avoir décrit les étapes de sélection, de notation et d'analyse, on décrit maintenant un mode de mise en œuvre possible.

Une manière de mesurer la similitude entre les moments mesurés sur une piste inconnue et les moments d'une signature d'un mode candidat de la base de données, est de calculer l'indice dit « de Jaccard » [**33**] qui est bien adapté pour comparer la similarité (ou la dissimilarité) entre paramètres de deux modes radar.

L'indice de Jaccard est défini ici pour deux ensembles X et Y qui correspondent aux ensembles de valeurs d'un paramètre donné, respectivement pour la piste et pour un mode candidat. Il est calculé à partir des grandeurs suivantes, où |X| désigne le cardinal de l'ensemble X :

- Le nombre de valeurs du paramètre considéré qui sont communes à la piste et au mode candidat :

$$N_1 = |X \cap Y|.$$

- Le nombre de valeurs prises par le paramètre dans la piste mais pas dans le mode candidat :

$$N_2 = |X \cap \bar{Y}|.$$

- Le nombre de valeurs prises par le paramètre dans le mode candidat mais pas dans la piste :

$$N_3 = |\bar{X} \cap Y|.$$

L'indice de Jaccard vaut alors :

$$S = \frac{N_1}{N_1 + N_2 + N_3}.$$

Pour un paramètre donné, le calcul d'un indice de similarité tel que l'indice de Jaccard entre la piste et les modes candidats permet d'obtenir, après renormalisation, l'équivalent d'une table de probabilité de concordance entre la piste et les modes candidats (une masse de probabilité).

Par exemple pour N modes candidats et un paramètre $a$ donné, $a$ pouvant être la fréquence, ou la PRI, etc., la table de probabilité de concordance pour le paramètre $a$ entre la piste $P$ et les modes candidats $(M_k)_{k=1...N}$ est, avec l'indice de Jaccard $S_a(./.)$:

$$\begin{pmatrix} \pi_a(P/M_1) \\ \pi_a(P/M_2) \\ \pi_a(P/M_3) \\ ... \\ \pi_a(P/M_N) \end{pmatrix} = \frac{1}{k_a} \begin{pmatrix} S_a(P/M_1) \\ S_a(P/M_2) \\ S_a(P/M_3) \\ ... \\ S_a(P/M_N) \end{pmatrix} \quad \text{avec} \quad k_a = \sum_{k=1}^{N} S_a(P/M_k).$$

Une concordance globale $C_{ab}$ entre 2 paramètres $a$ et $b$ peut alors être obtenue en multipliant les concordances partielles :

$$C_{ab} = \sum_{k=1}^{N} \pi_a(P/M_k) . \pi_b(P/M_k) \tag{6}$$

La concordance est toujours positive en tant que somme de termes positifs. Elle est bornée par l'inégalité de Cauchy-Schwartz. On peut montrer que :

$$C_{ab} \leq \sqrt{\max\left(\frac{1}{2}, \sup \pi_a\right) \max\left(\frac{1}{2}, \sup \pi_b\right)}.$$

Les deux tables $\pi_a$ et $\pi_b$ ont au plus une valeur supérieure à ½ (puisque leur somme vaut 1). Si les valeurs maximales des deux tables sont toutes les deux inférieures à ½ alors la concordance est bornée par ½. Si les valeurs maximales des deux tables sont toutes les deux supérieures à ½ alors la concordance est bornée par leur moyenne géométrique, qui est alors comprise entre ½ et 1. On introduit ensuite le conflit qui est le complément à 1 de la concordance globale :

$$K_{ab} = 1 - C_{ab} \qquad (7)$$

A l'issue de cette étape on dispose d'une table des conflits entre les paramètres. Certains paramètres peuvent être en faveur d'une identification alors que d'autres peuvent aller contre, c'est ce qui est résumé par la table des conflits.

L'analyse des conflits fait l'objet de la dernière étape d'analyse :

- Pour le regroupement de deux paramètres *a* et *b*, on obtient, pour le k-ème mode candidat $M_k$:

$$\pi_{\{a,b\}}(P/M_k) = (1 - K_{ab}) . \frac{\pi_a(P/M_k) . \pi_b(P/M_k)}{\sum_{j=1}^{N} \pi_a(P/M_j) . \pi_b(P/M_j)} + K_{ab} . \frac{\pi_a(P/M_k) + \pi_b(P/M_k)}{2} \; ;$$

- Pour le regroupement de deux groupes de paramètres A et B, il faut tenir compte du nombre de paramètres $n_A$ et $n_B$ composant chacun des groupes. La partie conjonctive est donnée par :

$$\pi_{A.B}(P/M_k) = \frac{\pi_A(P/M_k)^{n_A} . \pi_A(P/M_k)^{n_B}}{\sum_{j=1}^{N} \pi_A(P/M_j)^{n_A} . \pi_A(P/M_j)^{n_B}} \; ;$$

et la partie disjonctive est donnée par :

$$\pi_{A+B}(P/M_k) = \frac{n_A . \pi_A(P/M_k) + n_B . \pi_B(P/M_k)}{n_A + n_B} \; .$$

La table de concordance du regroupement des deux groupes A et B est alors :

$$\pi_{\{A,B\}}(P/M_k) = (1 - K_{ab}) . \pi_{A.B}(P/M_k) + K_{ab} . \pi_{A+B}(P/M_k) \; .$$

Si on reprend l'exemple du tableau 1 et si on calcule les conflits entre les paramètres deux à deux selon les équations 6 et 7, le conflit minimal est celui entre les paramètres $P_1$ et $P_4$, valant $K_{\{14\}}$=0.4755.

Le regroupement $\{P_1,P_4\}$ conduit à la table de probabilités (qui est une table de similarité particulière) mise à jour avec :

$\pi_{\{14\}}$ = [**0.84**, 0.04, 0.04, 0.03, 0.04].

Le calcul des conflits entre les paramètres $P_2$, $P_3$ et le regroupement $\{P_1,P_4\}$ montre que le plus petit des conflits est celui entre les paramètres $P_2$ et $P_3$, valant $K_{23}$=0.4833.

Le regroupement $\{P_2,P_3\}$ conduit à la table mise à jour avec :

$\pi_{\{23\}}$ = [0.025, 0.045,0.045, **0.84**, 0.048].

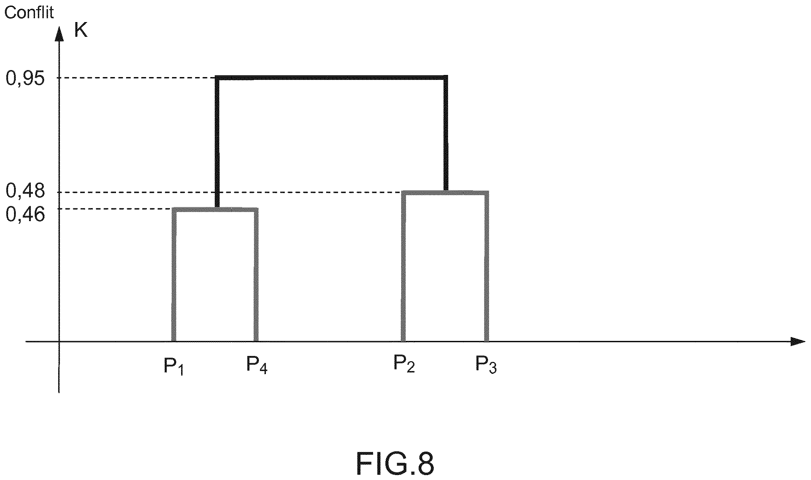

Finalement, le conflit entre les deux regroupements $\{P_1,P_4\}$ et $\{P_2,P_3\}$ est $K_{\{\{14\}\{23\}\}}$=0.95. On obtient ainsi une analyse similaire à l'analyse des fusions bayésiennes mais avec un indice des conflits entre les paramètres pris deux à deux. Le dendrogramme obtenu est représenté sur la **figure 8.**

Ce dendrogramme est peut être présenté à un opérateur qui sélectionne alors le mode radar retenu en fonction des valeurs de conflits affichées. Dans cet exemple les méthodes classiques ne permettent pas de discriminer le mode candidat $C_1$ du mode candidat $C_4$. Avec le regroupement des paramètres en coalition l'invention permet de discriminer ces modes. L'opérateur peut ainsi retenir le mode C1 dont le regroupement de paramètres $\{P_1,P_4\}$ présente le plus faible conflit.

De même dans l'exemple relatif à la figure 2, l'introduction des coalitions des paramètres {1,3} et {2,4} conformément à l'invention permet de retrouver des performances proches du cas idéal dans les cas de mélange.

L'invention utilise avantageusement la notion de conflit, cette notion pouvant être définie de manière très générale dans le cadre de plusieurs formalismes utiles en identification de modes radar (probabilités, possibilités, crédibilités). Outre la souplesse du choix du cadre d'application, l'invention permet de mettre en évidence rapidement les coalisations ou groupements de paramètres, et ainsi de fournir une meilleure compréhension des incertitudes en jeu dans le mécanisme d'identification.

L'invention a été décrite pour l'identification de formes d'ondes. Elle peut néanmoins s'appliquer pour l'identification d'autres types d'objets.

**Références citées**

**[1]** D.C. Schleher, "Introduction to Electronic Warfare", Artech House, Dedham (MA), USA, 1986.

**[2]** C. Brolly et al., « Application de la théorie de l'information pour l'extraction passive radar en guerre électronique marine », 16e colloque GRETSI, pp.603-606, Grenoble, France, 15-19 Sept. 1997.

**[3]** P.R. Kumar et al., De-Interleaving and Identification of Pulsed Radar Signais Using ESM Receiver System, International Journal of Advanced Research in Electrical, Electronics and Instrumentation Engineering, vol.4, no.7, pp.6243-6252, July 2015.

**[4]** A.M. Kilincarslan, A. Kara, "Identification of Highly Jittered Radar Emitters: Issues on Low Cost Embedded Design", International Conference on Computing and Information Technology, vol.2, pp.739-744, Medinah, Saudi Arabia, 2012.

**[5]** J. Roe, A. Pudner, "The Real-Time Implementation of Emitter Identification for ESM", IEE Colloquium on Signal Processing in Electronic Warfare, pp.7/1-7/6, London, UK, 31 Jan. 1994.

**[6]** G.A. Carpenter et al., "Fuzzy ARTMAP : A Neural Netwotk Architecture for Incremental Supervised Learning of Analog Multidimensional Maps", IEEE Trans. Neural Networks, vol.3, no.5, pp.698-713, Sept. 1992.

**[7]** E. Granger et al., "Comparison of Classifiers for Radar Emitter Type Identification", C.H. Dagli et al. Eds., Intelligent Engineering Systems Through Artificial Neural Networks, vol.9, pp.3-11, New York, USA, 1999.

**[8]** E. Granger et al., "A What-and-Where Fusion Neural Network for Recognition and Tracking of Multiple Radar Emitters", Technical Report CAS/CNS-TR-2000-029, Boston University, Boston (MA), USA, Dec. 2000.

**[9]** M. Conning, F. Potgieter, "Analysis of Measured Radar Data for Specific Emitter Identification", IEEE Radar Conference, pp.35-38, Washington DC, USA, 10-14 May 2010.

**[10]** S.A. Hassan et al., "Emitter Recognition using Fuzzy Inference System", IEEE International Conférence on Emerging Technologies, pp.204-208, Islamabad, Pakistan, 17-18 Sept. 2005.

**[11]** Y.M. Chen et al., "Identification of Highly Jittered Radar Emitters Signais based on Fuzzy Classification", IOSR Journal of Engineering, vol.3, no.10, pp.53-59, Oct. 2013.

**[12]** Y.M. Chen et al., "Emitter Identification of Electronic Intelligence System Using Type-2 Fuzzy Classifier", Systems Science & Control Engineering, vol.2, pp.389-397, 2014.

**[13]** W. Rui-Jia, W. Xing, "Radar Emitter Recognition in Airborne RWR/ESM Based on Improved K Nearest Neighbor Algorithm", IEEE International Conference on Computer and Information Technology, pp.148-151, Xi'an, China, 11-13 Sept. 2014.

**[14]** L. Li, H. Ji, "Combining Mltiple SVM Classifiers for Radar Emitter Recognition", Proc. 6th International Conférence on Fuzzy Systems and Knowledge Discovery, p.140-144, Yantai, China, 16-16 Aug. 2010.

**[15]** Z. Yang et al., "Hybrid Radar Emitter Recognition Based on Rough k-Means Classifier and Relevance Vector Machine", Sensors, vol.13, pp.848-864, 2013.

**[16]** L.E. Langley, "Specific Emitter Identification (SEI) and Classical Parameter Fusion Technology", WESCON93, pp.377-381, San Francisco (CA), USA, 28-30 Sept. 1993.

**[17]** S. D'Agostino et al., "Specific Emitter Identification: Analysis on Real Radar Signal Data", Proc. of the 6th European Radar Conference, pp.242-245, Rome, Italy, 30 Sept.-2 Oct. 2009.

**[18]** J. Dudczyk, A. Kawalec, "Fractal Features of Specific Emitter Identification", Acta Physica Polonica series A, vol.124, no.3, pp.406-409, Oct. 2013.

**[19]** D. Shaw, W. Kinsner, "Multifractal Modelling of Radio Transmitter Transients for Classification", WESCANEX97: Communications, Power and Computing, pp.306-312, Winnipeg, Man., 22-23 May 1997.

**[20]** Y.-J. Yuan et al., "Specific Emitter Identification based on Transient Energy Trajectory", Progress In Electromagnetic Research C, vol.44, pp.67-82, 2013.

**[21]** A. Aubry et al., "Cumulants-Based Radar Specific Emitter Identification", IEEE International Workshop on Information Forensics and Security, pp.1-6, Foz do Iguaçu, Brazil, 29 Nov.-2 Dec. 2011.

**[22]** T. Han, Y. Zhou, "Intuitive Systemic Models and Intrinsic Features for Radar-Specific Emitter Identification", F. Sun et al. (eds), Foundations and Practical Applications of Cognitive Systems and Information Processing, Advances in Intelligent Systems and Computing 215, pp.153-160, Springer-Verlag, Berlin/Heidelberg, Germany, 2014.

**[23]** J. Dudczyk, A. Kawalec, "Specific Emitter Identification based on Graphical Représentation of the Distribution of Radar Signal Parameters", Bulletin of the Polish Academy of Sciences - Technical Sciences, vol.63, no.2, pp.391-396, 2015.

**[24]** Y. Shi, H. Ji, "Kernel Canonical Correlation Analysis for Specific Radar Emitter Identification", Electronics Letters, vol.50, no.18, pp.1318-1320, Aug. 2014.

**[25]** J.-F. Grandin, "Information Fusion. Theory at Work", in Hassan Fourat (ed.): Multisensor Data Fusion - From Algorithms and Architectural Design to Applications, CRC-Press, 2015.

**[26]** J.-F. Grandin, C. Moulin, "What Practical Différences Between Probabilities, Possibilities, and Credibilities", Proc. SPIE vol.4731, Sensor Fusion : Architectures, Algorithms, and Applications VI, 86, March 2002.

**[27]** D. Dubois, H. Prade, « Théorie des Possibilités », Masson, Paris, 1985.

**[28]** D. Dubois, H. Prade, "Combination of Fuzzy Information in the Framework of Possibility Theory", in M.A. Abidi and R.C. Gonzalez (eds), Data Fusion in Robotics and Machine Intelligence, pp.481-505, Academic Press, New York, USA, 1992.

**[29]** D. Dubois, H. Prade, "Possibility Theory and Data Fusion in Poorly Informed Environments", Control Engineering Practice, vol.2, pp.812-823, 1994.

**[30]** M. Oussalah, "Study of Some Algebraical Properties of Adaptive Combination Rules", Fuzzy Sets and Systems, vol.114, no.3, pp.391-409, Sept. 2000.

**[31]** M. Oussalah, "Data Fusion: A Study of Adaptive Combinations with Incomplete Certainty Qualification", Kybernetes, vol.35, no.9, pp.1452-1491, 2006.

**[32]** F. Pfenning, "Lecture Notes on AVL Trees", Lecture Notes 15-122, n.18, Carnegie Mellon Univerity, March 2011.

**[33]** H.-H. Bock, E. Diday (eds.), "Analysis of Symbolic Data - Exploratory Methods for Extracting Statistical Information from Complex Data", Springer-Verlag, Berlin/Heidelberg, 2000.

**Revendications**

1. Procédé d'identification de modes d'émission radar par un système de détection de signaux radar, un mode étant **caractérisé par** un ensemble de paramètres caractéristiques définissant lesdits signaux radar, ledit ensemble de paramètres comportant la fréquence d'émission (FR), la longueur d'impulsion (DI) et la période de répétition (PRI), ledit procédé étant **caractérisé en ce qu'**il comporte au moins :

- une première étape (32) sélectionnant un nombre restreint de modes candidats issus d'une base de données (34) à partir de l'interception d'un mode radar inconnu à identifier apte à être **caractérisé par** un nombre L de paramètres donnés ;
- une deuxième étape (36) effectuant une notation :

  ◦ par affectation d'un indice de similarité à chacun desdits L paramètres, pour chaque mode candidat, ledit indice étant l'indice de similarité entre le moment du paramètre du mode candidat et le moment du même paramètre du mode inconnu et ;
  ◦ par calcul d'une valeur de conflit entre lesdits paramètres pris deux à deux, calcul effectué à partir des indices de similarité de moments de chacun desdits paramètres ;

- une troisième étape consistant à regrouper, par itérations successives, lesdits L paramètres de telle façon que, à chaque itération :

  ◦ les deux paramètres ayant la plus faible valeur de conflit ($K_{min}^{(t)}$) soient regroupés ;
  ◦ les indices de similarité des moments des autres paramètres soient calculés pour le regroupement ;
  ◦ la mise à jour des conflits est effectuée par le calcul de la valeur de conflit entre le regroupement et les autres paramètres ;
  ◦ la plus faible valeur de conflit ($K_{min}^{(t)}$) soit mémorisée ainsi que les indices de similarité ($i_1^{(t)}$ et $i_2^{(t)}$ des deux paramètres regroupés ;

l'identification du mode radar consistant à choisir le regroupement (71) de paramètres issu de l'itération (t) dont la valeur de plus faible conflit ($K_{min}^{(t)}$) est inférieure à un seuil donné, et à retenir en premier le mode candidat dont l'indice de similarité est le plus grand parmi les indices de similarités mémorisés jusqu'à ladite itération (t).

2. Procédé selon la revendication 1, **caractérisé en ce qu'**il utilise une base de données (34) mémorisant les modes radar sous formes d'intervalles délimités par les valeurs minimale et maximale de chaque paramètre caractéristique, un mode candidat étant sélectionné dans ladite première étape par comparaison des mesures de paramètres dudit mode radar inconnu avec lesdits intervalles, un mode candidat étant retenu s'il comporte au moins un intervalle contenant une mesure d'un paramètre du mode radar inconnu.

3. Procédé selon la revendication 2, **caractérisé en ce que** les paramètres utilisés pour définir lesdits intervalles dans la base de données (34) sont la fréquence d'émission, la longueur d'impulsion et la période de répétition des impulsions.

4. Procédé selon l'une quelconque des revendications précédentes, **caractérisé en ce que** les indices de similarité étant du type probabiliste, la valeur du conflit K entre deux paramètres est donnée par l'équation suivante :

$$K = 1 - \sum_{B} P_1(B)P_2(B)$$

$P_1(B)$, $P_2(B)$ étant respectivement la probabilité d'un des deux paramètres et la probabilité de l'autre paramètre, dans le mode B parcourant l'ensemble des modes candidats.

5. Procédé selon l'une quelconque des revendications 1 à 3, **caractérisé en ce que** les indices de similarité étant du type possibiliste, la valeur du conflit $K$ entre deux paramètres est donnée par l'équation suivante :

$$K = 1 - \sup_{B} \min\big(\pi_1(B), \pi_2(B)\big)$$

$\pi_1(B), \pi_2(B)$ étant respectivement la possibilité d'un des deux paramètres et la possibilité de l'autre paramètre, dans le mode B parcourant l'ensemble des modes candidats.

6. Procédé selon l'une quelconque des revendications 1 à 3, **caractérisé en ce que** les indices de similarité étant du type crédibiliste, la valeur du conflit $K$ entre deux paramètres est donnée par l'équation suivante :

$$K = 1 - \sum_{B \cap C = \emptyset} m_1(B) m_2(C)$$

$m_1(B), m_2(C)$ étant respectivement la crédibilité d'un des deux paramètres et la crédibilité de l'autre paramètre, dans les modes B et C parcourant l'ensemble des modes candidats.

7. Procédé selon l'une quelconque des revendications précédentes, **caractérisé en ce que** l'indice de similarité affecté à un paramètre, pour un mode candidat, est calculé à partir d'un indice de Jaccard, cet indice étant défini entre l'ensemble de valeurs dudit paramètre pour ledit mode radar inconnu et l'ensemble de valeurs dudit paramètre pour ledit mode candidat.

8. Dispositif d'identification de modes d'émission radar, **caractérisé en ce qu'**il comporte un système de réception de signaux radar et des moyens de traitement aptes à mettre en œuvre le procédé selon l'une quelconque des revendications précédentes.

9. Radar, **caractérisé en ce qu'**il est apte à mettre en œuvre le procédé selon l'une quelconque des revendications 1 à 7.


**Patentansprüche**

1. Verfahren zur Identifizierung von Radaremissionsmodi durch ein Radarsignal-Erkennungssystem, wobei ein Modus durch eine Gruppe von charakteristischen Parametern gekennzeichnet ist, welche die Radarsignale definieren, wobei die Gruppe von Parametern die Emissionsfrequenz (FR), die Impulslänge (DI) und die Wiederholungsperiode (PRI) umfasst, wobei das Verfahren **dadurch gekennzeichnet ist, dass** es mindestens Folgendes umfasst:

- einen ersten Schritt (32), welcher eine beschränkte Anzahl von Kandidatenmodi auswählt, welche aus einer Datenbank (34) stammen, anhand des Abfangens eines unbekannten, zu identifizierenden Radarmodus, welcher in der Lage ist, durch eine Anzahl $L$ gegebener Parameter charakterisiert zu werden;
- einen zweiten Schritt (36), welcher eine Benotung bewerkstelligt:

• durch Zuweisen eines Ähnlichkeitsindizes an jeden der $L$ Parameter, für jeden Kandidatenmodus, wobei der Index der Ähnlichkeitsindex zwischen dem Zeitpunkt des Parameters des Kandidatenmodus und dem Zeitpunkt desselben Parameters des unbekannten Modus ist; und
• durch Berechnen eines Konfliktwertes zwischen den jeweils paarweise betrachteten Parametern, wobei die Berechnung anhand der Ähnlichkeitsindizes von Zeitpunkten eines jeden der Parameter bewerkstelligt wird;

- einen dritten Schritt, darin bestehend, durch sukzessive Iterationen die $L$ Parameter so zu gruppieren, dass bei jeder Iteration:

• die beiden Parameter mit dem geringsten Konfliktwert ($K_{min}^{(t)}$) gruppiert werden;
• die Ähnlichkeitsindizes der Zeitpunkte der anderen Parameter für die Gruppierung berechnet werden;
• die Aktualisierung der Konflikte durch die Berechnung des Konfliktwertes zwischen der Gruppierung und den anderen Parametern erfolgt;
• der geringste Konfliktwert ($K_{min}^{(t)}$) sowie die Ähnlichkeitsindizes ($i_1^{(t)}$ et $i_2^{(t)}$ der beiden gruppierten Parameter gespeichert werden;

wobei die Identifizierung des Radarmodus darin besteht, die Gruppierung (71) von Parametern zu wählen, welche aus der Iteration (t) stammt, deren geringster Konfliktwert ($K_{min}^{(t)}$) einen gegebenen Schwellenwert unterschreitet, und zuerst den Kandidatenmodus zurückzubehalten, dessen Ähnlichkeitsindex der größte unter den Ähnlichkeitsindizes ist, welche bis zu der Iteration (t) gespeichert wurden.

2. Verfahren nach Anspruch 1, **dadurch gekennzeichnet, dass** es eine Datenbank (34) verwendet, welche Radarmodi in Form von Intervallen speichert, welche durch den Mindest- und den Höchstwert eines jeden charakteristischen Parameters begrenzt werden, wobei ein Kandidatenmodus in dem ersten Schritt durch Vergleich der Messungen von Parametern des unbekannten Radarmodus mit den Intervallen ausgewählt wird, wobei ein Kandidatenmodus zurückbehalten wird, wenn er mindestens ein Intervall umfasst, welches eine Messung eines Parameters des unbekannten Radarmodus einschließt.

3. Verfahren nach Anspruch 2, **dadurch gekennzeichnet, dass** die zum Definieren der Intervalle in der Datenbank (34) verwendeten Parameter die Emissionsfrequenz, die Impulslänge und die Wiederholungsperiode der Impulse sind.

4. Verfahren nach einem der vorhergehenden Ansprüche, **dadurch gekennzeichnet, dass** die Ähnlichkeitsindizes probabilistischer Art sind, wobei sich der Konfliktwert $K$ zwischen zwei Parametern aus der folgenden Gleichung ergibt:

$$K = 1 - \sum_B P_1(B)P_2(B)$$

wobei $P_1(B)$, $P_2(B)$ jeweils die Wahrscheinlichkeit eines der beiden Parameter und die Wahrscheinlichkeit des anderen Parameters in dem Modus B sind, welcher sich über sämtliche Kandidatenmodi erstreckt.

5. Verfahren nach einem der Ansprüche 1 bis 3, **dadurch gekennzeichnet, dass** die Ähnlichkeitsindizes possibilistischer Art sind, wobei sich der Konfliktwert K zwischen zwei Parametern aus der folgenden Gleichung ergibt:

$$K = 1 - \sup_B \min\left(\pi_1(B), \pi_2(B)\right)$$

wobei $\pi_1(B)$, $\pi_2(B)$ jeweils die Möglichkeit eines der beiden Parameter und die Möglichkeit des anderen Parameters in dem Modus B sind, welcher sich über sämtliche Kandidatenmodi erstreckt.

6. Verfahren nach einem der Ansprüche 1 bis 3, **dadurch gekennzeichnet, dass** die Ähnlichkeitsindizes kredibilistischer Art sind, wobei sich der Konfliktwert $K$ zwischen zwei Parametern aus der folgenden Gleichung ergibt:

$$K = 1 - \sum_{B \cap C = \emptyset} m_1(B)m_2(C)$$

wobei $m_1(B)$, $m_2(C)$ jeweils die Glaubwürdigkeit eines der beiden Parameter und die Glaubwürdigkeit des anderen Parameters in den Modi B und C sind, welche sich über sämtliche Kandidatenmodi erstrecken.

7. Verfahren nach einem der vorhergehenden Ansprüche, **dadurch gekennzeichnet, dass** der einem Parameter zugewiesene Ähnlichkeitsindex für einen Kandidatenmodus anhand eines Jaccard-Indizes berechnet wird, wobei dieser Index zwischen der Gruppe der Werte des Parameters für den unbekannten Radarmodus und die Gruppe der Werte des Parameters für den Kandidatenmodus definiert wird.

8. Vorrichtung zur Identifizierung von Radaremissionsmodi, **dadurch gekennzeichnet, dass** sie ein Empfangssystem von Radarsignalen und Verarbeitungsmittel umfasst, welche in der Lage sind, das Verfahren nach einem der vorhergehenden Ansprüche umzusetzen.

9. Radar, **dadurch gekennzeichnet, dass** er in der Lage ist, das Verfahren nach einem der Ansprüche 1 bis 7 umzusetzen.

**Claims**

1. Method for identifying modes of radar emission by a system for detecting radar signals, a mode being **characterized**

**by** a set of characteristic parameters defining said radar signals, said set of characteristics having the emission frequency (FR), the pulse length (DI) and the repetition period (PRI), said method being **characterized in that** it comprises at least:

- a first step (32) selecting a restricted number of candidate modes arising from a database (34) on the basis of the interception of an unknown radar mode to be identified able to be **characterized by** a number *L* of given parameters;
- a second step (36) performing a scoring:

 ∘ by assigning a similarity index to each of the said *L* parameters, for each candidate mode, the said index being the index of similarity between the moment of the parameter of the candidate mode and the moment of the same parameter of the unknown mode and;
 ∘ by computing a value of conflict between the said parameters taken pairwise, the computation being performed on the basis of the indices of similarity of moments of each of the said parameters;

- a third step consisting in grouping together, by successive iterations, the said *L* parameters in such a way that, at each iteration:

 ∘ the two parameters having the lowest conflict value ($K_{min}^{(t)}$) are grouped together;
 ∘ the similarity indices of the moments of the other parameters are computed for the grouping;
 ∘ the updating of the conflicts is performed by computing the value of conflict between the grouping and the other parameters;
 ∘ the lowest conflict value ($K_{min}^{(t)}$) is stored as well as the similarity indices ($i_1^{(t)}$ and $i_2^{(t)}$) of the two parameters grouped together;

the identification of the radar mode consisting in choosing the grouping (71) of parameters that arises from the iteration (t) whose value of lowest conflict ($K_{min}^{(t)}$) is less than a given threshold, and in retaining first the candidate mode whose similarity index is the largest from among the similarity indices stored up to the said iteration (t).

2. Method according to claim 1, **characterized in that** it uses a database (34) storing the radar modes in the forms of intervals delimited by the minimum and maximum values of each characteristic parameter, a candidate mode being selected in the said first step by comparing the measurements of parameters of the said unknown radar mode with the said intervals, a candidate mode being retained if it comprises at least one interval containing a measurement of a parameter of the unknown radar mode.

3. Method according to claim 2, **characterized in that** the parameters used to define the said intervals in the database (34) are the emission frequency, the pulse length and the repetition period of the pulses.

4. Method according to any one of the preceding claims, **characterized in that** the similarity indices being of the probabilistic type, the value of the conflict K between two parameters is given by the following equation:

$$K = 1 - \sum_B P_1(B)P_2(B)$$

$P_1(B)$, $P_2(B)$ being respectively the probability of one of the two parameters and the probability of the other parameter, in the mode B running through the set of candidate modes.

5. Method according to any one of claims 1 to 3, **characterized in that** the similarity indices being of the possibilistic type, the value of the conflict *K* between two parameters is given by the following equation:

$$K = 1 - \sup_B \min\big(\pi_1(B), \pi_2(B)\big)$$

$\pi_1(B)$, $\pi_2(B)$ being respectively the possibility of one of the two parameters and the possibility of the other parameter, in the mode B running through the set of candidate modes.

6. Method according to any one of claims 1 to 3, **characterized in that** the similarity indices being of the credibilistic type, the value of the conflict *K* between two parameters is given by the following equation:

$$K = 1 - \sum_{B \cap C = \emptyset} m_1(B)m_2(C)$$

$m_1(B), m_2(C)$ being respectively the credibility of one of the two parameters and the credibility of the other parameter, in the modes B and C running through the set of candidate modes.

7. Method according to any one of the preceding claims, **characterized in that** the similarity index assigned to a parameter, for a candidate mode, is computed on the basis of a Jaccard index, this index being defined between the set of values of said parameter for said unknown radar mode and the set of values of said parameter for said candidate mode.

8. Device for identifying radar emission modes, **characterized in that** it comprises a system for receiving radar signals and processing means able to implement the method according to any one of the preceding claims.

9. Radar, **characterized in that** it is able to implement the method according to any one of claims 1 to 7.

FIG.1

EP 3 491 411 B1

FIG.2

Comportements Capteur sur Mode Radar — 33'

Bibliothèque — 34

Connaissance Capteur — 33

Analyse — 39

Filtrage = Extraction des modes candidats — 32

Plot — 31

VC + Plot — 35 / 31

Comparaison Locale — 36

Note globale — 360

Expert #1 — 361

Expert #2 — 362

Expert #n — 363

VI (LV) — 37

SITAC — 38

**FIG.3**

FIG.4

Longueur
d'impulsion

PRI

Fréquence
d'émission

FIG.5

EP 3 491 411 B1

EP 3 491 411 B1

Entrées : Tables des conflits entre les paramètres, $(K_{i,j})_{1 \leq i < j \leq L}$ — 40

Initialisation : L singletons de paramètres, $t \leftarrow 1$ — 400

$t \leftarrow (t+1)$

Fusionner les deux groupes de paramètres ayant le plus faible conflit — 41

Indices des groupes fusionnés $i_1^{(t)}$ et $i_2^{(t)}$
Conflit minimal $K_{min}^{(t)}$

Mettre à jour la table des indices de concordance pour le regroupement — 42

Mettre à jour la table des conflits entre le regroupement et les autres groupes — 43

44

$t = L$ ?

Non | Oui

Sorties : — 45

*Liste des conflits minimaux $K_{min}^{(t)}$, t=1…L.

*Hiérarchie des regroupements

* Indices $i_1^{(t)}$ et $i_2^{(t)}$

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2998974 A1

**Littérature non-brevet citée dans la description**

- **D.C. SCHLEHER.** Introduction to Electronic Warfare. Artech House, 1986
- **C. BROLLY et al.** Application de la théorie de l'information pour l'extraction passive radar en guerre électronique marine. *16e colloque GRETSI,* 15 Septembre 1997, 603-606
- **P.R. KUMAR et al.** De-Interleaving and Identification of Pulsed Radar Signais Using ESM Receiver System. *International Journal of Advanced Research in Electrical, Electronics and Instrumentation Engineering,* Juillet 2015, vol. 4 (7), 6243-6252
- **A.M. KILINCARSLAN ; A. KARA.** Identification of Highly Jittered Radar Emitters: Issues on Low Cost Embedded Design. *International Conference on Computing and Information Technology,* 2012, vol. 2, 739-744
- **J. ROE ; A. PUDNER.** The Real-Time Implementation of Emitter Identification for ESM. *IEE Colloquium on Signal Processing in Electronic Warfare,* 31 Janvier 1994, 7, , 1-7, 6
- **G.A. CARPENTER et al.** Fuzzy ARTMAP : A Neural Netwotk Architecture for Incremental Supervised Learning of Analog Multidimensional Maps. *IEEE Trans. Neural Networks,* Septembre 1992, vol. 3 (5), 698-713
- Comparison of Classifiers for Radar Emitter Type Identification. **E. GRANGER et al.** Intelligent Engineering Systems Through Artificial Neural Networks. 1999, vol. 9, 3-11
- A What-and-Where Fusion Neural Network for Recognition and Tracking of Multiple Radar Emitters. **E. GRANGER et al.** Technical Report CAS/CNS-TR-2000-029. Boston University, Décembre 2000
- **M. CONNING ; F. POTGIETER.** Analysis of Measured Radar Data for Specific Emitter Identification. *IEEE Radar Conference,* 10 Mai 2010, 35-38
- **S.A. HASSAN et al.** Emitter Recognition using Fuzzy Inference System. *IEEE International Conférence on Emerging Technologies,* 17 Septembre 2005, 204-208
- **Y.M. CHEN et al.** Identification of Highly Jittered Radar Emitters Signais based on Fuzzy Classification. *IOSR Journal of Engineering,* Octobre 2013, vol. 3 (10), 53-59
- **Y.M. CHEN et al.** Emitter Identification of Electronic Intelligence System Using Type-2 Fuzzy Classifier. *Systems Science & Control Engineering,* 2014, vol. 2, 389-397
- **W. RUI-JIA ; W. XING.** Radar Emitter Recognition in Airborne RWR/ESM Based on Improved K Nearest Neighbor Algorithm. *IEEE International Conference on Computer and Information Technology,* 11 Septembre 2014, 148-151
- **L. LI ; H. JI.** Combining MItiple SVM Classifiers for Radar Emitter Recognition. *Proc. 6th International Conférence on Fuzzy Systems and Knowledge Discovery,* 16 Août 2010, 140-144
- **Z. YANG et al.** Hybrid Radar Emitter Recognition Based on Rough k-Means Classifier and Relevance Vector Machine. *Sensors,* 2013, vol. 13, 848-864
- **L.E. LANGLEY.** Specific Emitter Identification (SEI) and Classical Parameter Fusion Technology. *WESCON93,* 28 Septembre 1993, 377-381
- **S. D'AGOSTINO et al.** Specific Emitter Identification: Analysis on Real Radar Signal Data. *Proc. of the 6th European Radar Conference,* 30 Septembre 2009, 242-245
- **J. DUDCZYK ; A. KAWALEC.** Fractal Features of Specific Emitter Identification. *Acta Physica Polonica series A,* Octobre 2013, vol. 124 (3), 406-409
- **D. SHAW ; W. KINSNER.** Multifractal Modelling of Radio Transmitter Transients for Classification. *WESCANEX97: Communications, Power and Computing,* 22 Mai 1997, 306-312
- **Y.-J. YUAN et al.** Specific Emitter Identification based on Transient Energy Trajectory. *Progress In Electromagnetic Research C,* 2013, vol. 44, 67-82
- **A. AUBRY et al.** Cumulants-Based Radar Specific Emitter Identification. *IEEE International Workshop on Information Forensics and Security,* 29 Novembre 2011, 1-6

- Intuitive Systemic Models and Intrinsic Features for Radar-Specific Emitter Identification. **T. HAN ; Y. ZHOU et al.** Foundations and Practical Applications of Cognitive Systems and Information Processing, Advances in Intelligent Systems and Computing. Springer-Verlag, 2014, vol. 215, 153-160
- **J. DUDCZYK ; A. KAWALEC.** Specific Emitter Identification based on Graphical Représentation of the Distribution of Radar Signal Parameters. *Bulletin of the Polish Academy of Sciences - Technical Sciences,* 2015, vol. 63 (2), 391-396
- **Y. SHI ; H. JI.** Kernel Canonical Correlation Analysis for Specific Radar Emitter Identification. *Electronics Letters,* Août 2014, vol. 50 (18), 1318-1320
- Information Fusion. Theory at Work. **J.-F. GRANDIN.** Multisensor Data Fusion - From Algorithms and Architectural Design to Applications. CRC-Press, 2015
- **J.-F. GRANDIN ; C. MOULIN.** What Practical Différences Between Probabilities, Possibilities, and Credibilities. *Proc. SPIE vol.4731, Sensor Fusion : Architectures, Algorithms, and Applications VI,* Mars 2002, vol. 4731, 86
- **D. DUBOIS ; H. PRADE.** Théorie des Possibilités. Masson, 1985
- Combination of Fuzzy Information in the Framework of Possibility Theory. **D. DUBOIS ; H. PRADE.** Data Fusion in Robotics and Machine Intelligence. Academic Press, 1992, 481-505
- **D. DUBOIS ; H. PRADE.** Possibility Theory and Data Fusion in Poorly Informed Environments. *Control Engineering Practice,* 1994, vol. 2, 812-823
- **M. OUSSALAH.** Study of Some Algebraical Properties of Adaptive Combination Rules. *Fuzzy Sets and Systems,* Septembre 2000, vol. 114 (3), 391-409
- **M. OUSSALAH.** Data Fusion: A Study of Adaptive Combinations with Incomplete Certainty Qualification. *Kybernetes,* 2006, vol. 35 (9), 1452-1491
- Lecture Notes on AVL Trees. **F. PFENNING.** Lecture Notes 15-122. Carnegie Mellon Univerity, Mars 2011
- Analysis of Symbolic Data - Exploratory Methods for Extracting Statistical Information from Complex Data. Springer-Verlag, 2000